# EUROPEAN PATENT APPLICATION

(11) **EP 0 558 207 A2**
(43) Date of publication of application: **01.09.1993**
(21) Application number: 93301008.4
(22) Date of filing: 11.02.1993
(51) Int. Cl.: H01B 7/28, H01B 3/00

(54) **Water swelling tape**

(30) Priority: 25.02.1992 GB 9203995
(71) Applicant: SCAPA GROUP PLC, Blackburn, Lancashire BB2 6AY (GB)
(72) Inventor: Richardson, Peter James, Woodford, Cheshire, SK7 1PJ (GB); Preston, Joseph, Denton, Manchester, M34 1PX (GB); Stewart, Edward John, Higher Openshaw, Manchester, M11 1BD (GB)
(74) Representative: Goodwin, Mark

(57) **Abstract**

A water swelling tape for use as a component of cables has a laminate structure comprising at least two laminae bonded together by a super absorbent gel. During manufacture a limited amount of water is added to the surfaces of the laminae which are in contact with the absorbent gel so as to provide the required bond.

## Description

This invention relates to water swelling tape particularly, but not exclusively, for use as a component of cables.

It is known to make cables incorporating tape which swells on contact with water. Such tape is often referred to as water swelling tape or water blocking tape. If such water swelling tape is not present when a part of a cable is damaged then water can flow along the length of the tape by way of water seepage and capillary action. If this occurs the insulating properties of the cable may break down or corrosion of armouring wires may occur. However, if water swelling tape is provided in the cable any ingress of water causes the tape to swell, thereby forming a barrier which prevents the flow of water into the undamaged parts of the cable. Thus only a small part of the cable, rather than the entire length of cable, needs to be replaced leading to large savings in the cost of repair.

During cable manufacture the tape is wrapped in a helical or longitudinal fashion around the inner components of the cable such as the conductor wires. The location of the tape within the transverse section of the cable depends on the secondary function of the tape. Typically insulative water swelling tapes are located nearer the outer sheath of the cable whereas, in a power cable, semi-conductive water swelling tapes are more likely to be located nearer to the conductors within the cable so as to counter electrical stress around the conductors.

Conventionally water swelling tapes have a laminate construction, the layers of the laminate being bonded together by a low melt polyethylene or other polymeric powder. During manufacture the powder is intermixed with a super absorbent water swelling agent and bonding is effected by heat or "spot welding" using an embossing roller. If water comes into contact with the tape the super absorbent gel swells increasing the thickness of the tape thereby providing an effective dam which prevents further water penetration. However, the polyethylene bonding agent physically bonds the two layers of the laminate and this bond has to be broken by the force created by swelling of the super absorbent polymer. In practice this means that the rate at which the tape swells is reduced.

The present invention has been made from a consideration of this problem.

According to a first aspect of the present invention there is provided a water swelling tape having a laminate structure, wherein at least two laminae within the structure are bonded together by a water absorbent material.

According to a second aspect of the invention there is provided a method of making a water swelling tape having a laminate structure, said laminate structure comprising at least two laminae having an absorbent material provided therebetween, wherein a limited amount of water is added to the surfaces of the laminae which are in contact with the absorbent material so as to provide a bond between the absorbent material and the laminae.

No further adhesive such as polyethylene adhesive is required. The absorbent material acts as a bonding agent, thus eliminating the need for physical bonding, as is the case with known tapes. The controlled amount of water added to the facing surfaces of the laminae softens the extremities of the gel powder such that good adhesion is promoted to enable the laminae to be pressed together. Clearly excess water would cause the gel in its entirety to swell, which would be highly undesirable.

In one embodiment of the invention at least one lamina and preferably all of the laminae have semi-conducting properties. Alternatively at least one lamina and preferably all of the laminae have insulating properties.

At least one of the laminae preferably comprises non woven material. At least one of the laminae may comprise any of the following, either alone or in combination: polyesters, cellulose, rayon, polyamides such as Nylon (Trade Mark) and polyacrylates. The non-woven fibres may be bonded together either thermally, chemically or physically. In a preferred embodiment of the invention the absorbent material preferably comprises a super absorbent gel.

Such absorbent materials are available commercially with a variety of properties. Typical materials include cross-linked polyacrylic acids which absorb water relatively slowly but produce a gel with high stability, cross-linked polyacrylates are also available which swell much faster with resultant gels which are less stable. A third group are copolymers of acrylate and acrylamide co-monomers which give swell rates and stabilities within these two extremes.

It has been found advantageous to use a variety of blends of these materials depending upon the combination of swell rates and gel stability required, for example -

| 1. | Low Swell, | Low Speed, | High Stability |
|---|---|---|---|
| | Favor CT | 90% | |
| | Alcasorb AB3F | 10% | |

| 2. | High Swell, | High Speed, | Low Stability |
|---|---|---|---|
| | Favor CT | 10% | |
| | Alcasorb AB3F | 10% | |
| | Aquakeep AIMI | 80% | |

The above are examples only and, dependant upon the properties required it has been found that absorbent materials based either alone or in combination upon polyacrylatees, polyacrylamides and cellulose based derivatives are preferred.

In order that the present invention may be more readily understood a specific embodiment thereof will now be described by way of example only.

A water swelling tape comprises a laminate structure of two non-woven layers consisting of blends of polyester and cellulose fibres combined together by means of an acrylic binder. The first layer has a mass per unit area of 50 g.s.m. and the second layer has a mass per unit area of 15 g.s.m. At least one of the layers may be semi conductive. The two laminae are bonded together solely by way of the super absorbent gel provided therebetween.

Addition of water to the tape results in an expansion of 12mm in a miniature Perspex (Trade Mark) cylinder. With boosted quantities of gel expansions up to 4cms may be released.

The tape was able to hold back a water head of at least 0.1 bar in the transverse direction.

The tests were carried out in accordance with the method issued by the VDE VERLAG GmbH of Berlin, Germany referenced DIN VDE 0472 Part 811.

It is to be understood that the above described embodiment has been described by way of illustration only. Many modifications and variations are possible. For example the tape can be rendered semi-conductive by adding a solution of materials which may be advantageous in this respect.

## Claims

1. A water swelling tape having a laminate structure, characterised in that at least two laminae within the structure are bonded together by a water absorbent material.

2. A water swelling tape as claimed in claim 1, characterised in that substantially no polyethylene adhesive is provided between the laminae.

3. A water swelling tape as claimed in claim 1 or claim 2, characterised in that the absorbent material comprises a super absorbent gel.

4. A water swelling tape as claimed in any preceding claim, characterised in that the absorbent material comprises any of the following either alone or in combination:- polyacrylates, polyacrylamides, cellulose and derivatives of cellulose.

5. A water swelling tape as claimed in any preceding claim, characterised in that at least one of the laminae is a semi-conductor.

6. A water swelling tape as claimed in any preceding claim, characterised in that at least one of the laminae is an insulator.

7. A water swelling tape as claimed in any preceding claim, characterised in that at least one of the laminae comprises non-woven material.

8. A water swelling tape as claimed in claim 7, charactersised in that at least one of the laminae comprises any of the following either alone or in combination:- polyesters, cellulose, rayon, polyamides and polyacrylates.

9. A method of making a water swelling tape as claimed in any preceding claim comprising adding a limited amount of water to the surface of the laminae in contact with the absorbent material so as to provide a bond between the absorbent material and the laminae.

10. A method of making a water swelling tape having a laminate structure, said laminate structure comprising at least two laminae having an absorbent material provided therebetween, characterised in that a limited amount of water is added to the surfaces of the laminae which are in contact with the absorbent material so as to provide a bond between an absorbent material and the laminae.
